**Europäisches Patentamt**

**European Patent Office**

**Office européen des brevets**

(19)

(11) Publication number: **0 107 304**
**A2**

# (12) EUROPEAN PATENT APPLICATION

(21) Application number: **83305142.8**

(22) Date of filing: **05.09.83**

(51) Int. Cl.³: **G 06 F 3/04**

(30) Priority: **06.09.82 GB 8225345**

(43) Date of publication of application: **02.05.84**
**Bulletin 84/18**

(84) Designated Contracting States: **AT BE CH DE FR GB IT LI LU NL SE**

(71) Applicant: **TYCOM CORPORATION LIMITED, 40 New Bridge Street, London, EC4v 6BE (GB)**

(72) Inventor: **Emrys, John Williams, 1 Ironmonger Court, Neath Hill Milton Keynes (GB)**

(74) Representative: **Bernard, Alan Peter et al, F.J. CLEVELAND & COMPANY 40/43 Chancery Lane, London WC2A 1JQ (GB)**

(54) **Small computer.**

(57) A small computer includes a base processor and a number of peripheral devices. The base processor is connected to the peripherals via a bus along which signals in a high level language e.g. a message block format, are communicated. Each peripheral device has an interface to the bus including a memory store enabling the high level messages to be translated into machine codes to control the device. An additional processor may be included, and it is treated, in effect, as a further peripheral device with an interface to the bus.

- 1 -

SMALL COMPUTER

DESCRIPTION

This invention relates to small computers. In particular it concerns the architecture of processing peripheral devices and a signalling bus in such computers.

A typical small computer is one suitable for use by medium sized commercial businesses to handle a data base, accounts and word processing. It is also likely to be adaptable for use as a personal computer with optional features for enthusiasts. Such a computer usually comprises a processor and an appropriate set of peripheral devices. New and improved processors and peripheral devices regularly appear on the market, but typically the computer is designed around a particular processor so that updating is restricted to peripheral devices, and this may also be severely restricted because of the type of fixed processor and its operating system. The present invention provides

0107304

a small computer in which both a processor and peripheral and device may be changed.

An attempt to design a computer in which the single processor can be replaced or chosen by the user will however result in major difficulties since there is a large amount of detailed Input/Output software that is required for the processor to be compatible with even a limited sub-set of the large range of peripheral devices, and most processor manufacturers do not attempt to provide compatability for more than a limited group of peripherals.

Computers in accordance with the present invention however include a dedicated base processor to which peripheral devices are connected and which handles Input/Output. In addition, a user may then have connected one or more processors for data handling running different operating systems, and these user processors may easily be replaced without major disturbance. The computer may be capable of a minimal performance in the absence of a user processor. This versatility is extremely desirable in any commercial small computer, given the present rapid advance in this technology.

Such a versatile computer must nevertheless maintain fast internal communication.

In the present invention, the inventors have discarded the conventional approach in which a real-time bit-level interface is provided between the processor operating system and, peripheral device, for example, a disc controller chip. This is replaced by a high level interface, of which at most only a few common variants are needed. This enables future peripherals to be used with existing operating systems, and future operating systems to be used with existing peripherals with only a few relatively simple handler programs being necessary to cope with the variants.

According to the present invention there is provided a small computer including a base data processor, the operating system of which is the basic operating system of the computer, linked by a signalling bus to a plurality of peripheral devices, each of the peripheral devices having an interface to the signalling bus including a dedicated memory on the peripheral side of the bus, the memory storing machine codes operative to translate commands in a high level format from the base processor to bit-level

0107304

instructions to control the peripheral device,
the base processor being programmed with a real-time
executive program whereby programs being run by the
base processor are interrrupted at intervals to allow
each program to operate for a short period, and hence,
independent programs, in effect, to run concurrently,
the base processor being operative to signal commands
to the peripheral devices along said signalling bus in
said high-level format, these instructions being
interpreted by said interface of a peripheral device
via said stored machine codes into bit-level
instructions to control the peripheral device.

Embodiments of the invention allow, for example,
complex keyboard repeat operatings, print spooling and
once-per-second peripheral control without any of the
routines being in any way affected by the others.

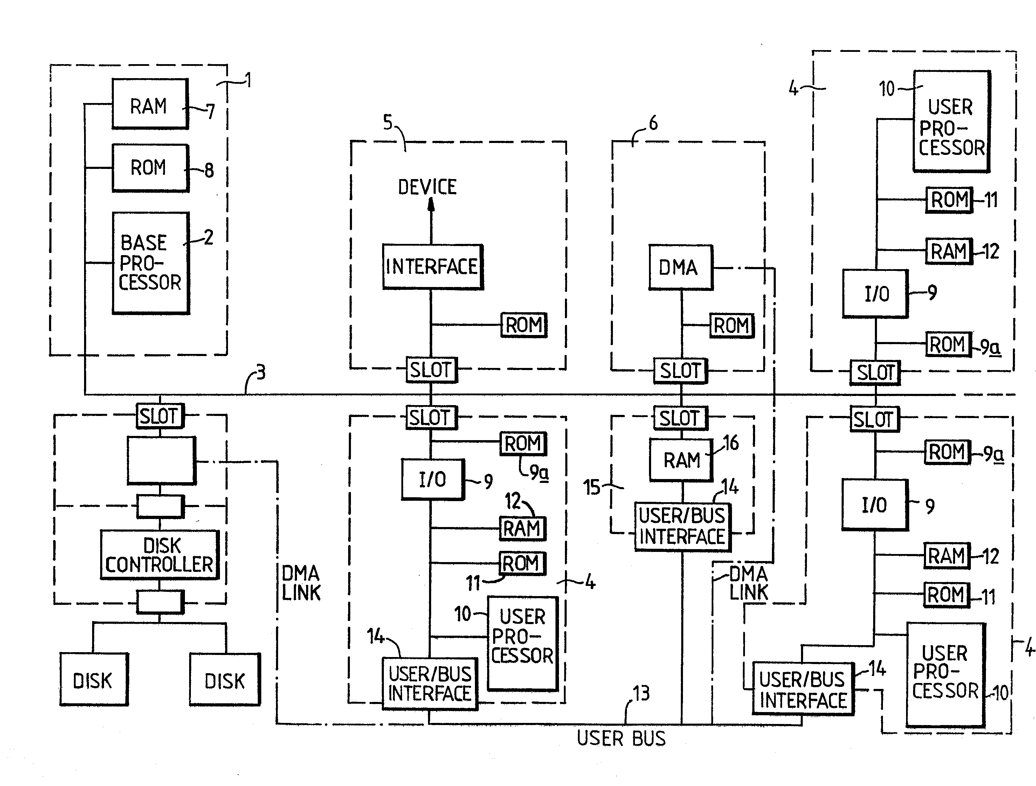

An embodiment of the present invention will now be
described by way of example only, with reference to
the accompanying drawing, which is a schematic block
diagram of a small computer in accordance with the
present invention.

The small computer illustrated in the figure essentially comprises a base processor card 1 including a base processor 2 in this example, an INTEL 8088. The base processor card includes several I/O slots into which other processors, which may be chosen by the user, can be plugged. The base processor card 1 has an 8-bit bus 3 to a respective slot from which the various user processor cards 4 and peripheral interface cards 5 are connected. One of the peripheral cards may be a direct memory access (DMA) device 6.

The base processor card 1 includes a random access memory 7. The size of the RAM 7 is dependent on the likely use of the computer and with a simple RAM controller up to 768 k bytes can be used. It is envisaged that the computer might be used for some applications with the base processor 2 as the sole processing means in the computer.

The base processor card 1 also includes the usual auxilliary components such as a clock generator, a power-up reset circuit, etc. It also includes some Read-Only memory 8, although this does not form a major memory component in this computer. In the present example two 28 pin ROM sockets are provided which can be made compatible with a range of devices for example in the range from a 2716 EPROM to a 64 k byte ROM.

Each user processor card 4 is linked to the base bus 3 by a pair of back-to-back parallel input/output chips 9 whose complexity may be varied according to the user processor 10 to which it is connected. This input/output chip 9 and its associated ROM 9a provides the link between the base processor 3 and the user processor 10. The ROM 8 on the base processor card 1 includes a program in 8088 code run by the base processor 2 to establish communication with the user processor 10. This program depends on the design of the input/output chips 9 but need not depend on the nature of the user processor 10. This advantage is significant in view of the general aim of the computer being independent of the type of user processor and of the type of peripheral devices generally.

The base processor has control of the reset line to the user processor through one bit of the input/output chip 9. This enables the failure of a single user processor to be detected without affecting the other users.  Typically the procedure is that the user processor 10 is held in a reset condition until the base processor 2 allows it to run.  When the user processor starts, it runs the program stored in its bootstrapping ROM 11.  Typically this ROM contains only certain self test routines and codes to allow the user processor to communicate through the input/output chip 9 and thereby to the operating system of the base processor 3.  Local RAM 12 is included on the user processor card and is used to run programs loaded through the input/output chip 9.  As an example, a Z80 user processor typically includes a 64k bit local RAM.

To enable the user processors 10 to have access to other cards, without signalling to the operational system of the base processor, a user bus 13 is provided.  Each of the peripheral devices which may be required to use this bus is connected thereto by an interface buffer unit 14.  One card to which the user processor may be connected is shown in the figure as a memory expansion card 15 including random access memory 16 and an interface unit connecting it to the user bus 13.  This user bus is needed only for very high data rate peripherals that would otherwise overload the base bus.  The user processor system is treated as simply another peripheral of the base processor. This imposes a uniformity of communications within the system. The base processor can thus be considered to be a message-switching machine enabling various detached devices to communicate via a high-level code. A suitable form of communication is the message block. A device issues a request to the base processor operating system which asks for transfer of a message block to device N and the operating system allerts device N to the fact that there is a message for it.

Each ROM 9a associated with a peripheral device or a processor holds machine code for a task or tasks run by the control program of the base processor. This is an executive program and is described further below. The tasks provide one of a small number of interface protocols 9 for example, the mass store protocol for the operating system and translate these high-level commands into real-time bit level control of the particular hardware on the card. Thus when a new peripheral card is designed, only ROM software for the device need be written to guarantee operation with any applicable operating system.

The type of high level instruction which is received by each ROM 9a associated with a peripheral card is a message block, for example, such a command to a storage device might comprise 3 bytes specifying the place in memory to send the answer, 2 bytes indicating the command e.g. 'read', 8 bytes specifying where message comes from, 8 bytes specifying how long the message is. Such a message block can be considered as embodying an instruction say, "Move N bytes from address P on the mass store to address Q in main RAM'.

The PROM 9a is programmed with a code that has a defined format. The PROM must specify the hardware wait states, provide start addresses for the tasks which control the peripheral, and provide the interrupt routines and tasks which communicate with the system.

```
WAIT:                    ;wait state definition
DIST:                    ;disable interrupt
                         ;self test routine
                         ;reserves RAM
                         ;provides start addresses
                         ;returns self test result

                  RETF

TASK:                    ;task run by
                         ;executive
                  PEND   ;wait for message
                         ;process command
                  POST   ;send reply
                  JMP    ;loop for next command

INT:                     ;interrupt task
                  REFT
```

At WAIT are 5 data bytes read by the system start up code to specify the peripheral's wait states.

DIST is a subroutine with a fixed output in the PROM run by the start up code to set up the environment for the real time system. It specifies one or more TASKS which are run as independent tasks by the executive. The TASK controls the peripheral and communicates with user programs using fixed format data blocks in RAM. The interrupt routines are run as subroutines by the system and talk to their tasks using the RAM reserved by the peripheral in the DIST routine.

The various devices can discover what other devices are in the system by use of a list compiled in the base processor of the devices present at switch-on. Upon request a device can have access to this table.

The controlling program of the base processor 2 is an executive program, that is to say all other programs operating in the computer must communicate with it, and are controlled by it to decide which program runs next. Each program running in the computer has its own data space and memory stack enabling independent programs to be run concurrently without harmful interaction. The characteristics of the executive program are that it comprises mainly (normally wholly) interrupt driven software, it has a relatively long interrupt response time and is independent of data position.

In an 8088 processor the time taken to switch between tasks is typically around 200 microseconds which corresponds to running a 9600 Baud serial line together with any number of lower speed tasks. If necessary the data throughput can be increased without disabling interrupts for a significant period by using the direct memory access provided on the DMA card 6. The controller for the DMA may either be included either on the DMA card 6 or alternatively on the base processor card 1 where it is shared out between peripheral devices.

The large address space included in the 8088 processor enables a separate 8k memory area to be allocated for peripheral firmware in each slot and also a shared, 64k bank-switched area for common peripheral use. The executive program enables a far more consistent control of this bank-switched area than is possible in any other known small computer.

In a computer as versatile as the one described the way the machine configures itself at switch on and at reset must be carefully taken into account. Typically when power is switched on the base processor will fetch its reset vector from the ROM 8 on the base processor card 1 and start running a program in ROM. The user processors and peripherals will be in a reset condition at this stage and the base processor will then start running a separate program in the ROM on its card.

The base processor tests its ROM and RAM and other elements on the base processor card 1 and then it runs the program in the ROM on any peripheral cards that are connected. These I/0 programs will self-test and then link their driving routines into the executive program in as near to a device-independent manner as is practicable. At the end of this process the base processor will know what cards are present and whether they work and how to drive them.

A similar procedure takes place in relation to any user processor that is connected except that it runs its own self-test programs on the user side of the base/user interface. The base processor will eventually know what user processor are present. This information then enables the system to be configured.

The base processor then searches for a device which can be bootstrapped; this is most likely to be the ROM on the base processor card 1. If this is not so it then searches on a priority basis for a device which can bootstrapped.

As an example, if the device that is bootstrapped is a floppy disc with a CP/M type program on it, the disc will be marked in some way so that the base processor knows what sort of user processor it may run on. The base processor using the I/O software on the disc controller card reads in the data from the floppy disc and the executive program will pass data to say, a user Z80. If there is no Z80 in the system the base processor will indicate this insufficiency. The software in ROM on the user processor card will enable the Z80 to talk to the base processor and when this data is read the base processor will pass the message to the Z80 software to start running the program just loaded /CP/M). The CP/M talks through its BIOS and the user/base interface to the executive in the base

0107304

processor which displays a predetermined character and waits for the keyboard.

The drive for a floppy disc comprises a peripheral card 17 which may be plugged in to the base bus 3. Data on the disc may be produced by various other user processor and the disc is labelled to show what processor they can be bootstrapped on. The user operating system sends read/write, track/sector messages to the base operating system and the base processor will normally have no way of knowing what part of the disc includes the bootstrapping information or what part the directory information or what part the directory information, nor how to interpret the directory once it is found.

This disc must carry data telling the base system at least the following:-

1. Which processor the disc will run on.

2. Memory needed on the appropriate processor.

3.  Where the boot strapping routine is on the disc.

4.  Where to load it in the target RAM.

5.  Where to start running it.

To accommodate this data the amount of other data that can be stored on the disc is reduced; but it is necessary for an unambiguous decision as to how to run a disc on a particular system. Information as to how to interpret the descriptive track is held in the ROM program on the controller card 17 for the floppy disc. The system is not constrained to use this particular program and should it be possible or required to access the information on the floppy disc in another way this particular program can be circumvented. A major benefit of the present invention is the ability of the system to produce a disc cache independently of the user operating system and it is unnecessary to match the disc format to the operating system. As an example, messages switched to the disc I/O routine on the disc card specify an operation that has been requested, (usually read or write) data, a data starting address and a data length in bytes. If the transfer requested does not line up precisely with the boundaries of the sectors on the disc the disc system will read and write appropriate data so that the disparity will be invisible to the user program. The starting address for a transfer will be specified in bytes from the start of data on a disc and the disc system can be regarded as a large slow simple memory. Because of the disc cache the required data will often be in RAM so that the reduced speed resulting from this access method is not significantly large.

When data is written on a disc, the disc system will put the data into a RAM buffer somewhere in the main RAM 7 on the base processor card. It then immediately tells the program trying to store data that the data has been written; that is before it has actually been moved to the disc. When the data comes to be written the disc may be faulty at a particular address where it is to be put the disc system must have some means of patching up the disc. This takes the form of a separate maping table used to re-direct IO away from that area of the disc into a space reserved for patching. This enables the procedure for handling bad tracks to be removed from the user operating system, although, by so doing, the available disc data area is made somewhat smaller. The high level interface means

0107304

that the user operating systems need not know what sort of disc drive they are using and a small floppy disc can appear just the same as a large rigid disc except that the total data area available is different. As an optional additional feature a rigid disc interface card may also be included in the computer.

The computer is constructed mechanically with a separate keyboard and display together with the main system unit which contains a processor, peripheral cards including user processor(s) and floppy disc drive units. The card format is based on the EUROCARD system and in this embodiment of the invention the allowable cards have widths of either 100mm or 234mm. The cards are plugged in from the back of the system units with peripheral connectors mounted on tiny front panels like a conventional rack. The peripheral cables are plugged onto the back of the systems unit. If six cards are stacked vertically and two cards placed side by side then twelve 100mm wide slots are available. A 234mm width card takes two slots. The arrangement of cards has to be carefully considered so that there is sufficient airflow for cooling purposes. A forced air cooling system is used and air is drawn in through a filter vent in the back of the case. It blows over the peripheral cards and is exhausted at the rear or at the back of the side of the unit. Holes are provided through the peripheral card guides to allow for this air flow.

The display unit has its own memory and plugs into a peripheral slot.

0107304

CLAIMS

1.    A small computer including a base data processor, the operating system of which is the basic operating system of the computer, linked by a signalling bus to a plurality of peripheral devices, each of the peripheral devices having an interface to the signalling bus including a dedicated memory on the peripheral side of the bus, the memory storing machine codes operative to translate commands in a high level format from the base processor to bit-level instructions to control the peripheral device, the base processor being programmed with a real-time executive program whereby programs being run by the base processor are interrupted at intervals to allow each program to operate for a short period, and hence, independent programs, in effect, to run concurrently. the base processor being operative to signal commands to the peripheral devices laong said signalling bus in said high-level format, these instructions being interpreted by said interface of a peripheral device

0107304

via said stored machine codes into bit-level instructions to control the peripheral device.

2. A small computer as claimed in claim 1 wherein said high-level format comprises message blocks signalled along bus and containing a plurality of separate messages required to enable a peripheral device to execute command, the separate messages being represented as one or more bytes in the message blocks, the number of bits per message being substantially less than the number of bits required to signal the same information in machine code to peripheral device, the separate message being contained with a predetermined sequence within the message block.

3. A small computer as claimed in claim 1 or claim 2 wherein one of said peripheral devices is a further data processor.

4. A small computer as claimed in claim 3 wherein the further data processor has a local operating system different from that of the base data processor.

0107304